Europäisches Patentamt

European Patent Office

Office européen des brevets

(19)

(11) Numéro de publication: **0 061 958
B1**

(12) **FASCICULE DE BREVET EUROPEEN**

(45) Date de publication du fascicule du brevet:
03.07.85

(51) Int. Cl.⁴: **B 21 H 5/02**

(21) Numéro de dépôt: **82400475.8**

(22) Date de dépôt: **15.03.82**

(54) **Dispositif pour le réglage précis du calage angulaire relatif des arbres entraînant des molettes de formage à froid.**

(30) Priorité: **17.03.81 FR 8105329**

(43) Date de publication de la demande:
**06.10.82 Bulletin 82/40**

(45) Mention de la délivrance du brevet:
**03.07.85 Bulletin 85/27**

(84) Etats contractants désignés:
**AT BE CH DE FR GB IT LI LU NL SE**

(56) Documents cités:
**CH - A - 460 686
US - A - 2 087 831
US - A - 2 689 493**

(73) Titulaire: **ESCOFIER TECHNOLOGIE S.A. Société
Anonyme dite:, 11 rue Paul Sabatier,
F-71107 Châlon-sur-Sâone (FR)**

(72) Inventeur: **Ansel, Jean Paul, 1B, rue Lieutenant André,
F-71100 Chalon sur Saone (FR)**
Inventeur: **Poullain, Jean, 32 Avenue Boucicaut,
F-71100 Chalon sur Saone (FR)**

(74) Mandataire: **Caunet, Jean et al, Cabinet BEAU DE
LOMENIE 55, rue d'Amsterdam, F-75008 Paris (FR)**

## Description

La présente invention concerne la technique dite du forgeage rotatif, selon laquelle deux molettes de formage prenant l'ébauche à façonner entre deux zones de contact diamétralement opposées, tournent en entraînant cette ébauche en rotation sans glissement et exercent sur celle-ci une pression déformante de façon à engendrer sur ladite ébauche un profil conjugué à ceux absolument identiques des molettes. Bien entendu, lesdites molettes doivent tourner en parfait synchronisme et le calage angulaire relatif de leurs profils doit être réglé avec précision pour que l'empreinte laissée par une molette dans l'ébauche s'engrène parfaitement, après une rotation d'un demi-tour, avec le motif de l'autre molette. Cette technique permet de fabriquer des filetages, des dentures et des cannelures en développante de cercle, des pièces de révolution à profil complexe etc...

La présente invention se rapporte au réglage du calage angulaire relatif d'au moins deux molettes pour parvenir au résultat exposé ci-dessus.

Un dispositif permettant ce réglage est décrit dans le brevet US-A-2087831. Il comporte, pour l'entraînement des molettes deux arbres devant tourner dans le même sens et en synchronisme. Ces arbres sont solidaires d'engrenages respectifs à dentures hélicoïdales en prise constante l'un avec l'autre, l'un des engrenages étant couplé avec un dispositif moteur (30); en outre, l'un de ces engrenages est mobile en translation coaxiale et est relié à un dispositif de réglage micrométrique de sa position axiale qui permet de déterminer le calage angulaire relatif des deux engrenages.

Dans ce dispositif connu, le dispositif moteur est directement relié à l'un des arbres dont l'engrenage joue alors le rôle d'engrenage menant tandis que l'engrenage de l'autre arbre devient l'engrenage mené. Le réglage du calage étant appliqué directement sur l'engrenage menant et par l'intermédiaire de celui-ci sur l'engrenage mené, la symétrie n'est pas respectée et il en résulte une certaine imprécision.

La présente invention a pour but d'atteindre une extrême précision avec fidélité, d'une façon simple, sûre et fiable, pendant le fonctionnement de la machine de forgeage rotatif et quelle que soit l'intensité des forces appliquées.

Pour atteindre ce but et conformément à l'invention, les deux engrenages précités sont menés, distincts et en prise respectivement avec deux engrenages menants à dentures hélicoïdales conjuguées de pentes symétriques et solidaires coaxialement l'un de l'autre, les deux engrenages menés étant immobilisés en translation axiale, tandis que l'ensemble des deux engrenages menants est mobile en translation coaxiale et coopère avec le dispositif de réglage micrométrique.

Le dispositif de réglage précité peut comporter un couple vis-écrou micrométrique dont la vis immobilisée en rotation mais attelée par une butée tournante aux engrenages menants, est guidée en translation axiale, tandis que l'écrou, immobilisé en translation, est libre de tourner et relié à un moyen de commande.

Une forme de réalisation de l'objet de l'invention est représentée, à titre d'exemple non limitatif, sur le dessin annexé.

Sur ce dessin:
– la figure 1 est une perspective montrant cette forme de réalisation du dispositif de réglage conforme à l'invention;
– la figure 2 est une coupe transversale prise suivant la ligne II–II de la figure 1 et comparée à une coupe transversale parallèle des molettes.

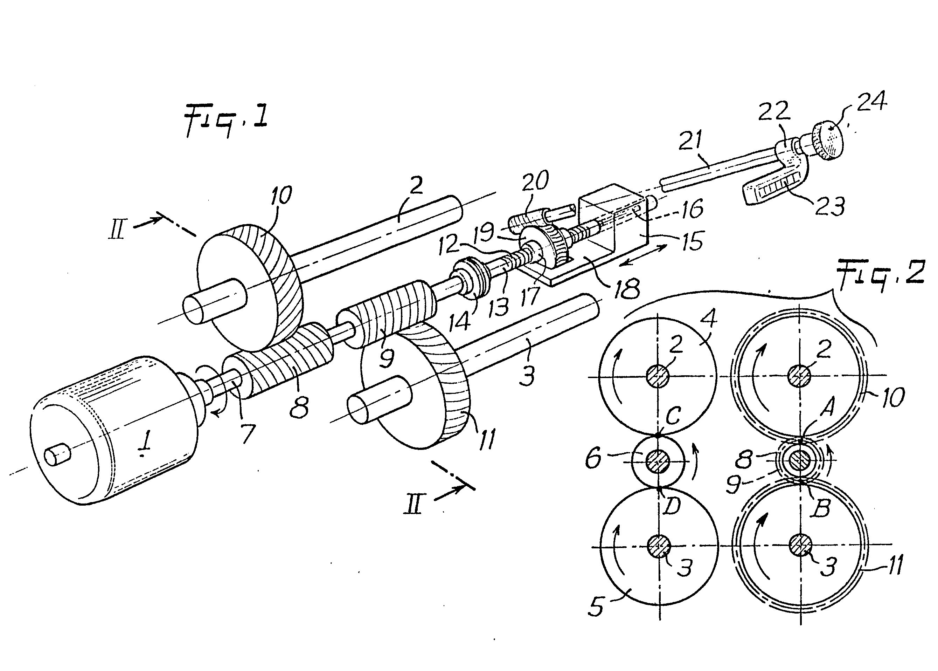

La machine de forgeage rotatif comporte un groupe motoréducteur ou moto variateur 1 destiné à entraîner en rotations synchrones deux arbres 2 et 3 sur lesquels sont montées, soit directement, soit par l'intermédiaire d'arbres inclinables coopérant avec des joints à la cardan comme dans certains laminoirs, des molettes de formage à froid 4 et 5 destinées à façonner une pièce 6 interposée entre elles (figure 2).

Suivant la forme de réalisation ressortant de la figure 1, l'organe de sortie du groupe 1 est relié, au moyen d'un accouplement coulissant, à un arbre menant 7 solidaire de deux engrenages 8 et 9, à dentures hélicoïdales de pentes symétriques. L'engrenage menant 8 est en prise permanente avec un engrenage mené 10 à denture conjuguée, solidaire de l'arbre d'entraînement 2. D'une façon analogue, l'engrenage menant 9 est en prise permanente avec un engrenage mené 11, à denture conjuguée, soldaire de l'arbre d'entraînement 3. De même que les pentes des dentures hélicoïdales des engrenages menants 8 et 9 sont symétriques, celles des dentures hélicoïdales des engrenages menés 10 et 11 sont également symétriques; comme ces engrenages menants, les engrenages menés sont décalés axialement et ne se trouvent donc pas situés en regard l'un de l'autre.

Considérant maintenant la figure 2, on constate que l'engrenage menant 8 est en contact avec l'engrenage mené 10 dans la zone A et l'engrenage menant 9 avec l'engrenage mené 11 dans la zone B, ces deux zones A et B étant diamétralement opposées. De même, la molette 4 est en contact avec la pièce 6 en une zone C diamétralement opposée à la zone de contact D de cette pièce avec la molette 5. Il est bien évident que les empreintes laissées en C et D sur la pièce 6 par les molettes 4 et 5 respectivement viendront, après une rotation d'un demi-tour de cette pièce, coiffer les motifs qui suivent en correspondance à ladite rotation, non pas sur les molettes 4 et 5, mais sur les molettes 5 et 4. Dès lors, il est indispensable que les molettes soient calés angulairement d'une façon parfaite l'une par rapport à l'autre pour que les motifs de chacune s'impriment dans la pièce en suivant rigoureusement la trace laissée par les motifs de la molette opposée. Il est donc nécessaire de pouvoir régler avec précision, à tout moment, le calage angulaire relatif desdites molettes – c'est-à-dire des points C et D – et, par conséquent le calage angulaire relatif des engrenages menés 10 et 11 – c'est-à-dire des points A et B. Or, ce calage angulaire varie lorsque les engrenages menants 8 et 9 sont déplacés en translation coaxiale, ceci en raison de la pente des dentures hélicoïdales.

Bien entendu, aucune poussée axiale ne s'applique sur l'arbre 7, étant donné que les dentures des engrenages menants 8 et 9 assimilables à des chevrons annulent, en raison de la symétrie, les réactions axiales.

Dans la forme de réalisation selon la figure 1, le dispositif de réglage dudit calage comporte un couple vis-écrou micrométrique; la vis 12 est solidaire d'une tige 13 dont une extrémité est attelée à l'arbre 7 par l'intermédiaire d'une butée à billes 14 à double effet qui transmet le déplacement axial de ladite vis audit arbre dans les deux sens, mais non la rotation de celui-ci à cette vis; d'ailleurs, l'autre extrémité de la tige est guidée en translation dans un support 15 et empêchée de tourner par une clavette 16; l'écrou 17 est libre en rotation, mais immobilisé en translation axiale par une fourchette 18 solidaire du support fixe 15. Le dispositif de réglage comporte, en outre, un couple roue tangente – vis sans fin pour la commande du réglage; la roue tangente 19 est taillée à la périphérie de l'écrou 17 et la vis sans fin 20 qui engrène avec cette roue, est portée par une tige de manœuvre 21; celle-ci est montée tournante et immobilisée en translation dans le corps fixe 22 d'un compteur 23; elle est munie d'un bouton 24 ou d'une manette de préhension pour le réglage.

Dès lors, en manœuvrant le bouton 24, on fait tourner la vis sans fin 20, donc la roue tangente 19 et l'écrou 17 dont elle est solidaire, ce qui a pour effet de déplacer en translation axiale, dans un sens ou le sens opposé, la vis micrométrique 12, laquelle entraîne dans le même mouvement, les engrenages menants 8 et 9. Il en résulte que les engrenages menés 10 et 11 se décalent angulairement l'un par rapport à l'autre. Le réglage est alors effectué jusqu'à coïncidence parfaite des empreintes laissées par les molettes 4 et 5 sur la pièce 6.

## Revendications

1. Dispositif pour le réglage précis du calage angulaire relatif des arbres entraînant les molettes de formage d'une machine de forgeage rotatif, ces arbres (2, 3) qui doivent tourner dans le même sens et en synchronisme étant solidaires d'engrenages à denture hélicoïdale (10, 11) en prise constante avec une denture hélicoïdale conjuguée (8, 9), un engrenage étant accouplé à un dispositif moteur (1), un engrenage étant en outre mobile en translation coaxiale et relié à un dispositif de réglage micrométrique (12 à 24) de sa position axiale qui permet de déterminer le calage angulaire relatif des deux engrenages précités, caractérisé en ce que ces deux engrenages sont menés distincts et en prise respectivement avec deux engrenages menants (8, 9) à dentures hélicoïdales conjuguées de pentes symétriques et solidaires coaxialement l'un de l'autre, les deux engrenages menés (10, 11) étant immobilisés en translation axiale, tandis que l'ensemble des deux engrenages menants est mobile en translation coaxiale et copère avec le dispositif de réglage micormé-trique.

2. Dispositif selon la revendication 1, caractérisé en ce que le dispositif de réglage précité comporte un couple vis-écrou micrométrique dont la vis (17), immobilisée en rotation mais attelée par une butée tournante (14) aux engrenages menants (8, 9) est guidée en translation axiale, tandis que l'écrou (17), immobilisé en translation est libre de tourner et relié à un moyen de commande (19 à 24).

3. Dispositif selon la revendication 2, caractérisé en ce que le moyen de commande précité comporte une roue tangente (19) solidaire de l'écrou micrométrique (17) et engrenant avec une vis sans fin (20) prolongée par une tige de manœuvre (21).

## Patentansprüche

1. Vorrichtung zur Feineinstellung der relativen Winkelausrichtung von Formwerkzeuge einer Rotationsschmiedemaschine antreibenden Wellen, welche Wellen (2, 3), die in dieselbe Richtung und synchron drehen sollen, mit Schrägverzahnungsgetrieben (10, 11) verbunden sind, welche in konstantem Eingriff mit einer gekoppelten Schrägverzahnung (8, 9) sind, wobei ein Zahnrad an eine Motoreinrichtung (1) angekuppelt ist und ein Zahnrad weiter koaxial verschiebbar und mit einer Mikrometereinstellungsvorrichtung (12 bis 24) für seine Axiallage verbunden ist, welche die Bestimmung der relativen Winkelausrichtung der beiden genannten Zahnräder gestattet, dadurch gekennzeichnet, dass die beiden Zahnräder getrennt angetrieben und mit zwei antreibenden Zahnrädern (8 bzw. 9) mit zugeordneten Schrägverzahnungen symmetrischer Steigung, welche koaxial miteinander verbunden sind, in Eingriff stehen, wobei die beiden angetriebenen Zahnräder (10, 11) in axialer Verschieberichtung unbeweglich sind, wogegen die Gesamtheit der beiden antreibenden Zahnräder in koaxialer Richtung verschiebbar beweglich ist und mit der Mikrometereinstellungsvorrichtung zusammenwirkt.

2. Vorrichtung nach Anspruch 1, dadurch ge-kennzeichnet, dass die Mikrometereinstellungs-vorrichtung ein mikrometrisches Schraube-Mut-ter-Paar umfasst, dessen Schraube (12), welche gegen Verdrehen gesichert, aber mittels eines Drehanschlags (14) an die antreibenden Zahnräder (8, 9) gekuppelt ist, in axialer Verschieberichtung geführt ist, wogegen die unverschiebbare Mutter (17) frei drehbar und mit einem Steuermittel (19 bis 24) verbunden ist.

3. Vorrichtung nach Anspruch 2, dadurch gekennzeichnet, dass das Steuermittel ein mit der Mikrometermutter (17) verbundenes Schneckenrad (19) umfasst, welches mit einer durch eine Betätigungsstange (21) verbundenen Schnecke (20) eingreift.

**Claims**

1. Device for precise adjustment of the relative angular positioning of the shafts driving the shaping wheels of a rotary forging machine, said shafts (2, 3) rotating in the same direction and synchronously, being integral with helical teethed gears (10, 11) in constant engagement with conjugate helical teeth (8, 9), one gear being coupled to a driving device (1), one other gear being also movable in coaxial translation and connected to a micrometric device (12 to 24) for adjusting its axial position, which device enables to determine the relative angular positioning of said two gears, characterized in that said two gears are driven separately and respectively engaged with two driving gears (8, 9) with paired helical teeth of symetrical inclination and coaxially integral one with the other, the two driven gears (10, 11) being immobilized in axial translation, whereas the assembly of the two driving gears is movable in coaxial translation and cooperates with the micrometric adjusting device.

2. Device according to claim 1, characterized in that said adjusting device comprises a micrometric nut and screw assembly, the screw (17) of which, fixed in rotation but coupled via a pivoting stop (14) to driving gears, is guided in axial translation, whereas the nut (17) immobilized in translation, is free to rotate and is connected to a control means (19 to 24).

3. Device according to claim 2, characterized in that said control means comprises a tangent wheel (19) integral with the micrometric nut (17) and meshing with an endless screw (20) extended by a monoeuvering rod (21).

Fig. 1

Fig. 2

0 061 958